# DEMANDE DE BREVET EUROPEEN

(11) **EP 4 283 399 A1**
(43) Date de publication de la demande: **29.11.2023**
(21) Numéro de dépôt: 23168585.0
(22) Date de dépôt: 18.04.2023
(51) Int. Cl.: G03C 1/494, B42D 25/41, B42D 25/351, B42D 25/23, B42D 25/36, B42D 25/378, B41M 5/26, B41M 5/36

(54) **PROCÉDÉ DE FABRICATION D'UN DOCUMENT D'IDENTITÉ, DOCUMENT D'IDENTITÉ ET PROCÉDÉ D'AUTHENTIFICATION D'UN TEL DOCUMENT D'IDENTITÉ**

(30) Priorité: 24.05.2022 FR 2204968
(71) Demandeur: IDEMIA France, 92400 Courbevoie (FR)
(72) Inventeur: SIARHEYEVA, Olga, 92400 Courbevoie (FR); BERTHE, Benoît, 92400 Courbevoie (FR); DOUWMA, Vranc, 92400 Courbevoie (FR); WEBER, Marcel, 92400 Courbevoie (FR)
(74) Mandataire: Idemia

(57) **Abrégé**

L'invention porte sur un procédé de fabrication d'un document d'identité, comprenant une étape consistant à fournir un corps de document (12) comprenant au moins une première et une seconde couches transparentes externes (20a, 20b) et une couche centrale blanche (22), la couche centrale blanche (22) comprenant un substrat transparent au moins partiellement recouvert d'un revêtement opaque blanc photosensible (32), une étape d'exposition d'au moins un point de la couche opaque blanche photosensible (32) à un premier rayonnement (34), le rayonnement étant adapté pour effectuer une ablation de la couche opaque blanche photosensible (32), de sorte que le point exposé au rayonnement devienne transparent, et de sorte que la lumière traverse l'épaisseur du document d'identité à l'emplacement du point. L'invention porte aussi sur un document d'identité et un procédé d'authentification d'un tel document.

## Description

L'invention concerne un document d'identité ou une carte d'identité, en particulier un document d'identité ou une carte comprenant un portrait secondaire.

Un tel document d'identité avec portrait secondaire est généralement connu de l'art antérieur. Il comprend généralement une image principale représentant le visage du titulaire du document, telle qu'un premier portrait, et un portrait secondaire représentant généralement la même image dans des dimensions généralement plus petites. L'image principale et le portrait secondaire sont intégrés dans différentes couches du document et réalisés selon différentes technologies afin de rendre le document difficile à contrefaire.

Il est connu de l'art antérieur EP3196044 et WO2018164574 de réaliser un portrait secondaire dans une fenêtre transparente dédiée. Traditionnellement, la fenêtre est construite en insérant un insert transparent dans un évidement préalablement découpé ou poinçonné dans l'épaisseur des couches opaques du document d'identité. Le portrait secondaire est ensuite réalisé à l'aide de différentes technologies, comme le noircissement d'un point ou l'utilisation d'un film mince optique variable dans une fenêtre transparente. Un inconvénient de l'utilisation d'une fenêtre transparente est que la fenêtre est une zone spécifiquement dédiée au portrait secondaire. Il est alors impératif que les dimensions du portrait secondaire soient adaptées à celles de la fenêtre transparente. Un autre inconvénient est que la fenêtre transparente interfère avec la surface imprimée de la carte et crée un fond non homogène pour la couche d'impression de la carte. Il est alors obligatoire de prendre en compte la taille de la fenêtre pour l'impression couleur. La couche d'impression est appliquée de manière à éviter la zone de la fenêtre.

De plus, la surface dédiée à ladite fenêtre n'est pas disponible pour l'impression ou la personnalisation des deux côtés d'un document. Certains documents, comme les cartes d'identité, sont relativement petits. Cette surface non disponible sur les deux faces de la carte peut être une contrainte inacceptable, ce qui exclut les technologies de fenêtres transparentes ou translucides.

Une solution décrite dans le document EP2001687 propose un portrait secondaire sans fenêtre. Le portrait secondaire est construit par perforation dans l'épaisseur du document. Grâce à cette solution, il n'est pas nécessaire de sélectionner une zone dédiée pour le portrait secondaire. En effet, la perforation peut se faire sur plusieurs zones du document d'identité. Néanmoins, cette solution rend le document mécaniquement plus fragile, en particulier, il y a un risque élevé de rupture à cet endroit sous l'effet contraintes mécaniques.

L'invention vise à fournir un document d'identité comprenant un portrait secondaire sans attribuer une zone transparente dédiée à ce portrait secondaire, ou sans enlever de surface utile pour l'impression, ou sans affaiblir la structure du document par perforation.

La présente invention remédie à ces différents inconvénients. A cet effet, l'objet de l'invention est un procédé de fabrication d'un document d'identité, comprenant une étape consistant à fournir un corps de document comprenant au moins une première et une seconde couches transparentes externes et une couche centrale blanche, la couche centrale blanche comprenant un substrat transparent au moins partiellement recouvert d'un revêtement opaque blanc photosensible, une étape d'exposition d'au moins un point du revêtement opaque blanche photosensible à un premier rayonnement, le rayonnement étant adapté pour effectuer une ablation du revêtement opaque blanc photosensible, de sorte que le point exposé au rayonnement devienne transparent, et de sorte que la lumière puisse traverser l'épaisseur du document d'identité à l'emplacement du point.

Grâce à ces caractéristiques, il est possible d'obtenir un portrait secondaire sans affaiblir la structure du corps du document d'identité. De plus, le revêtement opaque blanc photosensible peut également être utilisé comme fond du document d'identité.

Selon d'autres caractéristiques :
- le revêtement est une couche en film mince d'oxyde métallique appliquée sur le substrat transparent,
- le dépôt de la couche mince d'oxyde métallique est obtenu par dépôt chimique en phase vapeur dans un réacteur à plasma,
- le diamètre du point est inférieur à 500 µm, de sorte que point n'est pas visible dans des conditions de lumière ambiante pour un oeil humain, mais visible lorsqu'il est rétroéclairée par une lumière plus intense que la lumière ambiante,
- le premier rayonnement est un rayonnement laser proche d'un rayonnement UV, à une longueur d'onde dans la gamme de 190 à 400 nm, ou proche d'un rayonnement IR, à une longueur d'onde dans la gamme de 700 à 2500 nm, ou proche d'un rayonnement vert à une longueur d'onde dans la gamme de 500nm à 550 nm,
- plusieurs points du revêtement opaque blanc photosensible sont exposés au premier rayonnement afin de former un motif spécifique,
- le procédé comprend une étape consistant à ajouter un filtre entre la couche centrale blanche et la première couche transparente externe, le filtre étant adapté pour bloquer un second rayonnement différent du premier rayonnement, et étant adapté pour transmettre le premier rayonnement,
- le second rayonnement laser est un rayonnement laser proche d'un rayonnement laser UV, à une longueur d'onde comprise entre 190 et 400 nm, ou proche d'un rayonnement laser IR, à une longueur d'onde comprise entre 700 et 2500 nm, ou proche d'un rayonnement vert à une longueur d'onde comprise entre 500nm et 550 nm,
- au moins l'une de la première ou de la seconde couche transparente externe comprend un substrat dopé avec des additifs sensibles au second rayonnement, et comprenant une étape d'exposition du substrat au second rayonnement pour rendre noires les particules irradiées et former au moins une marque,
- la couche centrale blanche est constituée d'un substrat recouvert du revêtement opaque blanc photosensible sur toute la surface de la couche centrale,
- la couche centrale blanche est constituée d'un substrat teinté blanc comprenant une fenêtre recevant un insert transparent recouvert d'un revêtement opaque blanc photosensible,
- le procédé comprend une étape d'application d'une couche d'impression couleur comprenant au moins une zone libre d'impression, une étape de positionnement de la couche d'impression couleur entre la couche externe et la couche centrale blanche, la zone libre d'impression faisant face au revêtement opaque blanc photosensible de la couche centrale, une étape d'assemblage des couches par laminage pour former le corps du document.

L'invention porte aussi sur un procédé d'authentification d'un document d'identité comprenant les étapes suivantes : éclairer une première face du document d'identité sous une lumière plus intense que la lumière ambiante, positionner un dispositif de capture sur la seconde face du document, lire, par le dispositif de capture, du motif formé par les rayons lumineux traversant les points transparents, vérifier si le motif acquis correspond à une information du document, envoyer une réponse positive de la validité du document lorsque la correspondance est confirmée.

L'invention porte aussi sur une document d'identité comprenant une couche centrale blanche et une première et une seconde couches transparentes externes, la couche centrale blanche comprenant une zone formée par au moins une couche support transparente recouverte d'un revêtement opaque blanc photosensible, et des points transparents créés au sein du revêtement opaque blanc photosensible de sorte que la lumière traverse l'épaisseur du document d'identité à l'endroit du point.

Selon d'autres caractéristiques :
- les points transparents forment un motif spécifique,
- le diamètre des points est inférieur à 500 µm, de sorte que les points ne sont pas visibles dans des conditions de lumière frontale ambiante, mais visibles lorsqu'elles sont rétroéclairées par une lumière plus intense que la lumière ambiante.

D'autres modes de réalisation et avantages de l'invention sont décrits ci-après en référence aux figures, dans lesquelles :
La figure 1 est une vue de dessus d'un document d'identité de l'art antérieur,
La figure 2 est une vue de dessus d'un document d'identité selon la présente invention.
La figure 3a est une vue en coupe du document d'identité de la figure 2, selon la direction AA'.
La figure 3b est une coupe transversale d'un document d'identité selon un deuxième mode de réalisation de l'invention.

Dans la représentation des dessins, l'échelle et les proportions ne sont pas respectées afin d'accroître la clarté. En outre, dans les figures énumérées, des caractéristiques similaires peuvent avoir la même référence.

Le document d'identité selon l'invention peut être une carte d'identité, un permis de conduire, une carte bancaire, une carte de crédit, une carte d'identité, un document officiel ayant la forme d'un livret, tel qu'un passeport. Ces documents d'identité sont utilisés pour vérifier l'identité de leur détenteur.

Généralement, ces documents d'identité comprennent un corps plat délimitant une face supérieure et une face inférieure, le corps étant formé par une ou plusieurs couches en PC, ou PVC ou PET ou toute combinaison de ces matériaux. Habituellement, une face du document d'identité comporte un premier portrait tel qu'une photo officielle du titulaire du document, ce premier portrait étant conforme à certaines règles gouvernementales spécifiques. La partie restante de la face du document d'identité comprend plusieurs éléments de sécurité tels qu'un portrait secondaire du titulaire. Ce portrait secondaire permet de vérifier l'authenticité du document d'identité.

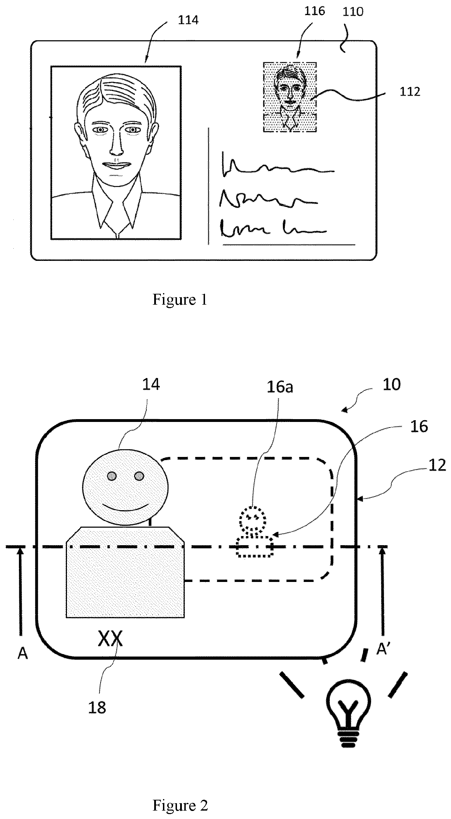

La figure 1 montre un document d'identité 110 de l'art antérieur. Le document d'identité comprend un premier portrait 114 et un portrait secondaire 116. Le premier portrait 114 peut être réalisé par impression sur l'une des couches du document d'identité 110. Le portrait secondaire 116 peut être réalisé dans une fenêtre dédiée 112 par gravure laser dans l'une des couches réalisée par exemple en polycarbonate dopé avec un matériau sensible pour provoquer un noircissement sélectif.

Comme on peut le voir sur la figure 1, la fenêtre 112 est dédiée à recevoir le portrait secondaire et n'est pas appropriée pour recevoir l'impression du premier portrait.

La figure 2 montre une vue de dessus d'une face supérieure d'un document d'identité 10 selon l'invention. Le document d'identité 10 comprend un corps 12 muni d'une image principale du titulaire sous la forme d'un premier portrait 14, d'un portrait secondaire 16 et de quelques marques ou caractéristiques visuelles 18.

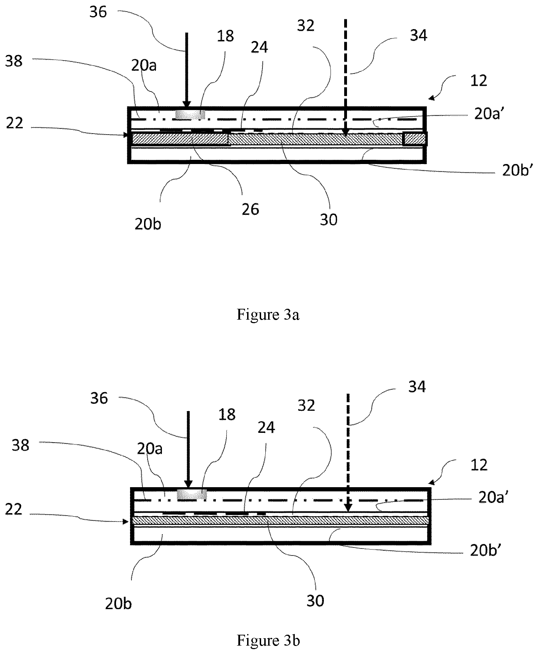

Le corps 12 est constitué de plusieurs substrats empilés, comme on peut le voir sur la figure 3a. En particulier, la figure 3a, qui représente une coupe transversale de la carte illustrée à la figure 2, montre un document d'identité comportant trois substrats. Chaque substrat peut être constitué d'un matériau polymère tel que le PVC, le Polycarbonate, le PET ou toute combinaison de ces matériaux.

Comme illustré sur la figure 3a, le document d'identité selon l'invention comprend une première et une deuxième couches externes transparentes 20a, 20b et une couche centrale blanche 22. Pour une meilleure compréhension, chaque substrat est représenté sur la figure 3a avec une face interne 20a', 20b'. Mais il est entendu qu'à l'interface de deux substrats, les faces internes des substrats sont fusionnées.

La première et la seconde couches externes 20a, 20b sont utilisées comme couches de protection pour protéger une couche d'impression couleur 24 montrant différents motifs, comme un élément sécuritaire, un blason d'un pays, un logo d'une carte bancaire et ainsi de suite. La couche centrale blanche 22 est utilisée comme un fond neutre et opaque pour la couche d'impression 24. La couche centrale blanche 22 peut être unie, teintée dans la masse, ou constituée de couches blanches prenant en sandwich une couche transparente. Les couches blanches sont soit en polymère blanc, soit imprimées avec une encre blanche.

Sur la figure 3a, la couche centrale 22 est constituée d'une couche blanche teintée 26 avec une ouverture recevant un insert 30 recouvert du revêtement blanc 32. En variante, la couche centrale 22 peut être constituée d'une couche transparente recouverte d'un revêtement opaque blanc 32 sur toute sa surface, comme illustré sur la figure 3b. Le revêtement opaque peut ne pas se trouver sur la surface mais à une profondeur quelconque de l'épaisseur de l'insert 30.

La couche d'impression couleur 24 est réalisée entre la couche centrale 22 et l'une des couches externes transparentes 20a, 20b. L'impression peut être réalisée sur la face interne de la première ou de la seconde couche externe transparente 20a, 20b, ou appliquée sur la face supérieure ou/et inférieure de la couche centrale 22. Les couches externes transparentes 20a ou 20b peuvent être techniquement constituées de plusieurs couches transparentes et dans ce cas, l'impression couleur peut être positionnée à n'importe quelles interfaces de ces couches. La couche d'impression couleur est représentée schématiquement sur la figure 2 en incluant un premier portrait 14. D'autres images ou motifs peuvent être dessinés dans la couche d'impression en couleur, comme des motifs de sécurité contenant des guillochis ou d'autres éléments de sécurité imprimés. Comme illustré sur la figure 3a, la couche d'impression en couleur est appliquée sur le côté intérieur de la couche transparente externe. Mais elle pourrait être appliquée sur la face supérieure de la couche centrale 22. La couche d'impression est appliquée par un procédé d'impression connu de l'art antérieur tel que la sérigraphie ou l'impression offset. Comme on peut le voir sur les figures 2 et 3a, l'impression couleur chevauche une zone de la couche centrale 22 teintée en blanc et une zone de l'insert 30 recouverte du revêtement opaque blanc 32. La couche teintée en blanc 26 et le revêtement blanc 32 sont suffisamment opaques dans la longueur d'onde visible pour bloquer la transmission de la lumière ambiante. En outre, la couche teintée blanche 26 et le revêtement blanc 32 sont utilisés comme primaire pour la couche d'impression couleur afin d'obtenir une couleur de l'impression uniforme et sans variation. Selon l'invention, au moins une région du revêtement blanc opaque 32 n'est pas couverte par l'impression. Cette région peut être différente pour chaque document d'identité ou lot de documents d'identité.

Selon l'invention, le revêtement opaque blanc 32 est réalisé par une couche mince d'oxyde métallique, tel qu'un oxyde métallique formant un pigment blanc, appliquée sur l'insert 30 en matériau polymère. Cette couche mince a une épaisseur de quelques nanomètres.

Le film mince d'oxyde métallique est appliqué par un procédé connu de l'art antérieur, par exemple des procédés plasma, tels que le PVD pour " physical vapour déposition " au sein d'un réacteur plasma.

Comme expliqué précédemment, la couche mince d'oxyde métallique doit former un fond neutre et opaque pour la couche d'impression couleur 24. A cet effet, la couche mince d'oxyde métallique est réalisée opaque dans le spectre des longueurs d'onde du visible.

En outre, le film mince d'oxyde métallique est sensible à un premier rayonnement 34 de sorte que le film mince est rendu transparent lorsqu'il est exposé à ce premier rayonnement 34. Le premier rayonnement 34 peut être appliqué par un laser. Lorsque le premier rayonnement 34 est appliqué sur le film mince d'oxyde métallique, dans la région non couverte par l'impression, la zone du film mince exposée au premier rayonnement 34 est localement transformée pour devenir transparente. Il est entendu que la nature de la transformation, physique et/ou chimique, conduisant de l'opacité à la transparence dépend du type d'oxyde métallique et du type de rayonnement irradiant la zone. Il peut s'agir d'une ablation locale de l'oxyde métallique pour former des micro-perforations dans le film d'oxyde métallique, ou d'une modification de la structure cristalline du film mince d'oxyde métallique entraînant une modification de la composition chimique du film mince se traduisant par une décoloration ou un blanchiment local des pigments du film mince d'oxyde métallique. La zone modifiée par le rayonnement est limitée/localisée au point de contact du rayonnement sur le film mince d'oxyde métallique. Cette zone présente donc une très faible dimension, de l'ordre de 500µm de diamètre, ou dimension transversale, et forme un point 16a.

Les première et deuxième couches externes 20a, 20b ne sont pas sensibles au premier rayonnement 34 et ne réagissent pas lorsqu'elles sont exposées au premier rayonnement 34. Cette sensibilité dépend non seulement de la longueur d'onde mais aussi de l'énergie. En effet, soit 20a et 20b ne sont pas sensibles au rayonnement 34, soit le seuil de sensibilité est supérieur à l'énergie du rayonnement 34 nécessaire pour réaliser l'ablation dans la couche 32. Grâce à la structure décrite ci-dessus, on évite la personnalisation, la destruction partielle des couches de polymère ou la délamination de ces couches de polymère. Seule la couche mince d'oxyde métallique est localement transformée par le rayonnement.

Le rayonnement est appliqué par une technologie laser émettant dans les longueurs d'onde du rayonnement UV (190nm - 400nm), ou infrarouge (700nm- 2500nm), ou vert (500nm - 550 nm). La longueur d'onde du rayonnement sera choisie en fonction des propriétés du film mince d'oxyde métallique. En particulier, le film mince d'oxyde métallique doit être sensible au rayonnement laser choisi.

Le mouvement de positionnement approprié du rayonnement laser sur plusieurs points 16a de l'oxyde métallique permet de former un ensemble de points 16a décolorés et permanents, formant ensemble le contour d'un motif 16, tel qu'un portrait secondaire 16 illustré à la figure 2. Le contour du motif 16 est réalisé dans la partie de la couche mince non recouverte d'impression ou recouverte sur un pourcentage très limité de la surface, avec de rares guilloches par exemple.

Chacun des points transparents 16a présente de très petites dimensions, inférieures à environ 500µm, en diamètre ou en dimension transversale. En conséquence, en lumière ambiante, ces points transparents 16a sont difficilement visibles pour un oeil humain à une distance d'observation normale de l'ordre de 30 à 40 cm en éclairage frontal. Cette caractéristique est avantageuse car elle permet d'intégrer, de manière discrète, en lumière ambiante, c'est-à-dire principalement en lumière frontale, un portrait secondaire formé par le motif de contour 16, sans modifier l'aspect général du document d'identité. En outre, le portrait secondaire 16 est visible lorsqu'il est exposé à une lumière arrière plus intense que la lumière ambiante. A cet effet, un utilisateur pourra voir le motif de contour 16 formé par les points transparents 16a lorsqu'il est rétro-éclairé. La figure 2 illustre le portrait secondaire 16 lorsqu'il est mis en évidence.

Grâce à la très haute précision de l'ablation par laser, il est possible d'obtenir un contour très clair et précis du point 16a, et donc un contour 16 facilement identifiable, c'est-à-dire que les points 16a sont tous présents et clairement visibles lorsqu'ils sont rétroéclairés. Le motif 16 n'est pas sensible à la réflexion spéculaire ou à la variation de l'éclairage, c'est-à-dire que chaque point 16a est présent et donne une information claire. Il est alors possible d'inspecter et de vérifier le motif de contour 16 de manière très fiable. Par exemple, il est possible de capturer une image du portrait secondaire formé par le motif de contour 16 par une caméra et d'analyser l'image pour vérifier l'authenticité du document d'identité. Le portrait secondaire 16 agit comme une signature qui peut être vérifiée par un dispositif facile à mettre en oeuvre. Ce procédé sera décrit plus loin dans la description.

Selon un mode de réalisation illustré aux figures 2, 3a et 3b, le document d'identité comporte une marque 18 représentant une caractéristique visuelle visible par l'utilisateur en lumière ambiante. Cette marque 18 est illustrée sur la figure 2 par la lettre "X". Cette marque 18 est obtenue par irradiation de la première couche externe 20a au moyen d'un deuxième rayonnement 36, différent du premier rayonnement 34. Ce deuxième rayonnement 36 est appliqué par un laser et est choisi parmi un rayonnement de longueur d'onde UV (100nm - 400nm), ou infrarouge (780nm- 1mm), ou vert (500nm - 550 nm). A cet effet, la première couche externe 20a est un polymère dopé par des additifs sensibles au second rayonnement laser 36 choisi afin d'obtenir une coloration de la première couche transparente lorsqu'elle est irradiée par le laser. En variante, les couches 20a et 20b sont constituées d'un polymère naturellement sensible au rayonnement 36 sans aucun additif. Par exemple, les additifs du polymère absorbent le second rayonnement laser 36 et sont carbonisés lorsqu'ils sont irradiés, devenant ainsi noirs. La première couche externe 20a est alors marquée par le noircissement des zones irradiées. Cette marque 18 est représentée par la lettre "X" sur la figure 2.

Selon un mode de réalisation préféré, le premier rayonnement 34 réalisant l'ablation du film mince d'oxyde métallique est un rayonnement UV et le second rayonnement 36 marquant la première ou la seconde couche externe 20a, 20b est un rayonnement infrarouge.

Selon un autre mode de réalisation, le premier rayonnement 34 réalisant l'ablation du film mince d'oxyde métallique, afin de réaliser la perforation, est un rayonnement IR et le second rayonnement 36 marquant la première ou la seconde couche externe 20a, 20b est un rayonnement UV

Selon un autre mode de réalisation, le premier rayonnement 34 réalisant l'ablation du film mince d'oxyde métallique, afin de réaliser la perforation, est un rayonnement vert et le second rayonnement 36 marquant la première ou la seconde couche externe 20a, 20b est un rayonnement IR.

La présente invention n'est pas limitée aux combinaisons décrites ci-dessus, et il peut être envisagé d'appliquer un autre type de rayonnement ou différentes combinaisons de ceux décrits ci-dessus.

Un filtre 40 est disposé dans la première couche externe transparente 20a pour éviter que la couche centrale 22 soit marquée par le second rayonnement 36. Ce filtre 40 agit comme un bloqueur du second rayonnement 36. Il est alors impossible que le deuxième rayonnement 36 irradie au-delà de l'épaisseur du filtre 40 ou dans une proportion suffisante pour que l'énergie restante du rayonnement 36 soit inférieure au seuil d'ablation du revêtement 32. Grâce à cette caractéristique, le second rayonnement 36 n'affecte pas la couche centrale 22. Ce filtre 40 est transparent au premier rayonnement 34, de manière à ne pas empêcher le premier rayonnement 34 d'atteindre la couche mince d'oxyde métallique.

Selon un mode de réalisation préféré, la couche filtrante 40 bloque le rayonnement infrarouge, et est transparente au rayonnement UV. Il est alors possible de perforer la couche mince d'oxyde métallique par un rayonnement UV tout en bloquant l'arrivée du rayonnement IR sur la couche mince qui est trop fragile pour recevoir l'énergie utilisée pour former le marquage.

La couche externe 20a peut être formée par le filtre disposé entre deux substrats, puis laminé ensemble.

Selon un autre mode de réalisation, une grille de démétallisation est formée dans le film mince d'oxyde métallique. La grille de démétallisation peut être prévue pour éviter les effets de délamination des couches de polymère. Cette grille est formée par des lignes très fines, par exemple des lignes de quelques nanomètres d'épaisseur, où l'oxyde métallique est retiré. Grâce à cette disposition, les couches de polymère entourant le film mince sont en contact le long de la grille de démétallisation, ce qui assure une bonne adhésion entre les couches.

Le document d'identité décrit ci-dessus est fabriqué selon les étapes suivantes :
Dans un premier temps, on prévoit les différentes couches du corps 12 du document d'identité. En particulier, le procédé comprend une étape de fourniture des première et deuxième couches transparentes externes 20a, 20b dont l'une au moins comprend une couche filtre 40 pour bloquer le deuxième rayonnement 36, et une étape de fourniture de la couche centrale blanche 22 qui comprend au moins un substrat transparent au moins partiellement recouvert d'une couche mince opaque blanche photosensible au premier rayonnement 34.

Le procédé de fabrication comprend en outre une étape de positionnement d'une couche d'impression 24 entre la première couche extérieure 20a et la couche centrale blanche 22. La couche d'impression 24 comprend une zone libre d'impression faisant face à une partie de la couche mince opaque photosensible blanche de la couche centrale 22.

Le procédé de fabrication comprend ensuite une étape d'assemblage des couches par laminage pour former le corps 12 du document.

Après que les couches ont été laminées ensemble, le procédé de fabrication comprend une étape d'exposition de la couche mince photosensible à un premier rayonnement 34, tel qu'un rayonnement laser, le premier rayonnement 34 étant adapté pour effectuer l'ablation de la couche mince opaque blanche en un point spécifique, de sorte que le point exposé au premier rayonnement 34 devient transparent, et que la lumière traverse l'épaisseur de la carte au niveau de ce point. Plusieurs points sont exposés au premier rayonnement 34 pour former le motif de contour 16.

Le motif de contour 16 obtenu à l'étape précédente peut être utilisé pour une étape d'authentification. A cet effet, l'invention concerne également un procédé d'authentification d'un document d'identité tel que décrit ci-dessus. Le procédé d'authentification comprend les étapes suivantes : L'utilisateur éclaire une première face du document d'identité avec une lumière plus intense que la lumière ambiante, telle qu'un éclairage intérieur ou la lumière du soleil en extérieur, telle qu'un flash de smartphone. Un dispositif de capture, tel qu'un autre smartphone, est positionné au-dessus de la seconde face du document d'identité et capture le contour du motif formé par les différentes points transparents traversées par les rayons lumineux. Le contour acquis ou sa signature est comparé à une donnée de référence enregistrée, et s'il y a une correspondance entre la donnée de référence et le contour acquis, la validité du document d'identité est confirmée.

## Revendications

1. Procédé de fabrication d'un document d'identité comprenant
une étape consistant à fournir un corps de document (12) comprenant au moins une première et une seconde couches transparentes externes (20a, 20b) et une couche centrale blanche (22), la couche centrale blanche (22) comprenant un substrat transparent au moins partiellement recouvert d'un revêtement opaque blanc photosensible (32),
une étape d'exposition d'au moins un point du revêtement opaque blanc photosensible (32) à un premier rayonnement (34), le rayonnement étant adapté pour effectuer une ablation du revêtement opaque blanc photosensible (32), de sorte que le point exposé au rayonnement devienne transparent, et de sorte qu'une lumière puisse traverser l'épaisseur du document d'identité à l'emplacement du point.

2. Procédé de fabrication d'un document d'identité selon la revendication 1, dans lequel le revêtement (32) est une couche en film mince d'oxyde métallique appliquée sur le substrat transparent.

3. Procédé de fabrication d'un document d'identité selon la revendication 2, dans lequel le dépôt de la couche mince d'oxyde métallique est obtenu par dépôt chimique en phase vapeur dans un réacteur à plasma.

4. Procédé de fabrication d'un document d'identité selon l'une des revendications 1 à 3, dans lequel le diamètre du point est inférieur à 500 µm, de sorte que le point n'est pas visible dans des conditions de lumière ambiante pour un oeil humain, mais visible lorsqu'il est rétroéclairée par une lumière plus intense que la lumière ambiante.

5. Procédé de fabrication d'un document d'identité selon l'une des revendications 1 à 4, dans lequel le premier rayonnement (34) est un rayonnement laser proche d'un rayonnement UV, à une longueur d'onde dans la gamme de 190 à 400 nm, ou proche d'un rayonnement IR, à une longueur d'onde dans la gamme de 700 à 2500 nm, ou proche d'un rayonnement vert à une longueur d'onde dans la gamme de 500nm à 550 nm.

6. Procédé de fabrication d'un document d'identité selon l'une des revendications 1 à 5, dans lequel plusieurs points du revêtement opaque blanc photosensible (32) sont exposés au premier rayonnement (34) afin de former un motif spécifique.

7. Procédé de fabrication d'un document d'identité selon l'une des revendication 1 à 6, comprenant une étape consistant à ajouter un filtre (40) entre la couche centrale blanche (22) et la première couche transparente externe (20a), le filtre (40) étant adapté pour bloquer un second rayonnement (36) différent du premier rayonnement (34), et étant adapté pour transmettre le premier rayonnement (34).

8. Procédé de fabrication d'un document d'identité selon la revendication 7, dans lequel le second rayonnement laser est un rayonnement laser proche d'un rayonnement laser UV, à une longueur d'onde comprise entre 190 et 400 nm, ou proche d'un rayonnement laser IR, à une longueur d'onde comprise entre 700 et 2500 nm, ou proche d'un rayonnement vert à une longueur d'onde comprise entre 500nm et 550 nm.

9. Procédé de fabrication d'un document d'identité selon l'une des revendications 1 à 8, dans lequel au moins l'une de la première ou de la seconde couche transparente externe (20a, 20b) comprend un substrat dopé avec des additifs sensibles au second rayonnement (36), et comprenant une étape d'exposition du substrat au second rayonnement (36) pour rendre noires les particules irradiées et former au moins une marque (18).

10. Procédé de fabrication d'un document d'identité selon l'une des revendications 1 à 9, dans lequel la couche centrale blanche (22) est constituée d'un substrat recouvert du revêtement opaque blanc photosensible (32) sur toute la surface de la couche centrale (22).

11. Procédé de fabrication d'un document d'identité selon l'une des revendications 1 à 9, dans lequel la couche centrale blanche (22) est constituée d'un substrat teinté blanc comprenant une fenêtre recevant un insert transparent (30) recouvert du revêtement opaque blanc photosensible (32).

12. Procédé de fabrication d'un document d'identité selon l'une des revendications 1 à 11, comprenant
une étape d'application d'une couche d'impression couleur (24) comprenant au moins une zone libre d'impression,
une étape de positionnement de la couche d'impression couleur (24) entre la couche externe (20a) et la couche centrale blanche (22), la zone libre d'impression faisant face au revêtement opaque blanc photosensible (32) de la couche centrale (22),
une étape d'assemblage des couches par laminage pour former le corps du document (12).

13. Procédé d'authentification d'un document d'identité fabriqué selon le procédé de l'une des revendications 1 à 12, **caractérisé en ce qu'**il comprend les étapes suivantes :
- éclairer une première face du document d'identité sous une lumière plus intense que la lumière ambiante,
- positionner un dispositif de capture sur la seconde face du document
- lire, par le dispositif de capture, du motif (16) formé par les rayons lumineux traversant les points transparents (16a),
- vérifier si le motif (16) acquis correspond à une information du document
- envoyer une réponse positive de la validité du document lorsque la correspondance est confirmée.

14. Document d'identité fabriqué selon l'une des revendications 1 à 12, comprenant
- une couche centrale blanche (22) et une première et une seconde couches transparentes externes (20a, 20b),
- la couche centrale blanche (22) comprenant une zone formée par au moins une couche support transparente recouverte d'un revêtement opaque blanche photosensible (32),
- et des points transparents (16a) créés au sein de la couche opaque blanche photosensible (32) de sorte que la lumière traverse l'épaisseur du document d'identité à l'endroit du point (16a).

15. Document d'identité selon la revendication 14, dans lequel les points transparents (16a) forment un motif (16) spécifique.

16. Document d'identité selon l'une des revendications 14 à 15, dans lequel le diamètre des points est inférieur à 500 µm, de sorte que les points (16a) ne sont pas visibles dans des conditions de lumière frontale ambiante, mais visibles lorsqu'elles sont rétroéclairées par une lumière plus intense que la lumière ambiante.
